(19) Europäisches Patentamt / European Patent Office / Office européen des brevets

(11) **EP 1 946 872 A2**

(12) **EUROPEAN PATENT APPLICATION**

(43) Date of publication:
23.07.2008  Bulletin 2008/30

(51) Int Cl.:
*B23H 1/02* (2006.01)     *B23H 11/00* (2006.01)

(21) Application number: 07121739.2

(22) Date of filing: 28.11.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(30) Priority: 18.01.2007 JP 2007009593

(71) Applicant: FANUC LTD
Minamitsuru-gun,
Yamanashi 401-0597 (JP)

(72) Inventors:
• MURAI, Masao
  Minamitsuru-gun, Yamanashi 401-0597 (JP)
• SAKURAI, Akihiro
  Minamitsuru-gun, Yamanashi 401-0597 (JP)

(74) Representative: Billington, Lawrence Emlyn
Haseltine Lake
Lincoln House
300 High Holborn
London WC1V 7JH (GB)

(54) **Electric discharge machining apparatus**

(57)    A voltage measurement circuit (4) is connected between an electrode (1) and a workpiece (2) by a parallel cable (3) through a resistor (R) to measure a machining gap voltage. The parallel cable (3), like a television antenna feeder line, is formed such that two conductive wires are parallel fixed by an insulating and flexible material such as rubber or resin with a predetermined distance. The interline distance of the parallel cable is increased to decrease a stray capacitance of the cable, so that a high-frequency voltage in finish machining can be measured by the voltage measurement circuit without being attenuated. The resistor is connected to suppress oscillation of a voltage input to the voltage measurement circuit.

FIG. 1

EP 1 946 872 A2

**Description**

BACKGROUND OF THE INVENTION

Field of the Invention

The present invention relates to an electric discharge machining apparatus which can improve the degree of surface roughness in finish machining.

Description of Related Art

In electric discharge machining, a voltage is applied across an electrode and a workpiece in working fluid to cause arc discharge. The moment the workpiece is melted by heat of the electric discharge, the working fluid is rapidly heated to cause vaporizing explosion so as to blow the melted workpiece out. This operation is frequently repeated to advance the machining. Small discharge crater generated by electric discharge gather to form a machining surface. For this reason, the sizes of the respective discharge crater determine the degree of surface roughness.
Since the sizes of the discharge crater generally depend on respective discharge energies, in finish machining or the like, a single-shot discharge energy must be suppressed as much as possible to improve the degree of surface roughness.
In general, a capacitor component called a stray capacitance is present between conductors which are insulated from each other. Since the stray capacitance is present in a machining gap formed by a machining electrode and a workpiece opposed to each other, when a voltage is applied across the electrodes, the stray capacitance is necessarily charged. Therefore, when electric discharge occurs, not only an energy supplied from a machining power supply but also an energy accumulated in the stray capacitance are supplied across the electrodes. In finish machining or the like, in order to decrease a discharge energy, when an energy supplied from the machining power supply is gradually reduced, an energy discharged from the stray capacitance considerably influences a single-shot discharge energy. The single-shot discharge energy influences the degree of surface roughness of the machining surface.
A main stray capacitance is present in a rough machining power supply and a rough machining cable between the machining gap and rough machining power supply.
Therefore, the following technique is known (see Japanese Patent Application Laid-Open No. 2002-66843). That is, a switch is connected between the rough machining cable and the electrode. In finish machining, the switch is turned off to disconnect the rough machining power supply and a stray capacitance of the rough machining cable. Fix the workpiece on the table with insulator so as to disconnect the stray capacitance between the machining table and the electrode.
A large stray capacitance is excluded by the method described in the Patent Document. However, a voltage measuring circuit which measures a machining gap voltage between the electrode and the workpiece also has a stray capacitance.
In general, an electric discharge machining apparatus measures a machining gap voltage between an electrode and a workpiece during machining to recognize a discharge state and to control relative feeding of the electrode to the workpiece. However, a measurement cable which connects the electrodes to the control circuit and the measurement circuit itself have stray capacitances. As a countermeasure which prevents the stray capacitance from degradation of surface roughness of finish machining, the following method is known (see Japanese Patent Application Laid-Open No. 7-328844). That is, the gap voltage is optically insulated by a photocoupler or the like and then transmitted to the control circuit to reduce the stray capacitance so as to improve the degree of surface roughness of the finish machining.
The following method is also known (see Japanese Patent Application Laid-Open No. 2000-42835). That is, a resistor is inserted in series on an input side of a circuit for detecting a machining gap voltage between an electrode and a workpiece, and electric discharge caused by the stray capacitance is suppressed by the resistor to improve the surface roughness.
In finish machining, in order to improve the surface roughness of a machining surface, a discharge energy must be decreased. However, an electric discharge caused by a stray capacitance being present in a cable or the like for connecting a voltage measurement circuit for measuring a gap voltage between a workpiece and an electrode to the electrode are added to normal intended electric discharge to increase a discharge energy and to cause a degradation of the degree of surface roughness of the machining surface. A method using a photocoupler or the like as described in Japanese Patent Application Laid-Open No. 7-328844 as a method of reducing the influence of the stray capacitance being present in the cable of the voltage measuring circuit for measuring the machining gap voltage is theoretically possible. However, it may be considerably difficult to realize insulating transmittion of high-frequency voltage signal at high accuracy in finish machining. Even if the method is realized, the method is highly expensive.
Furthermore, as described in Japanese Patent Application Laid-Open No. 7-328844, in the method in which a resistor is connected to the cable of the machining gap voltage measurement circuit to detect a machining gap voltage and to suppress electric discharge of the stray capacitance, the response of waveform of the machining gap voltage to be measured may be fall disadvantageously. A coaxial cable or a shielded cable is generally used as a voltage measurement cable for measuring the machining gap voltage between the workpiece and the electrode. Since such a cable has a large capacity, a low-pass filter is formed by the series resistor and the cable capacity, and the response of measurement waveform becomes bad disadvantageously.

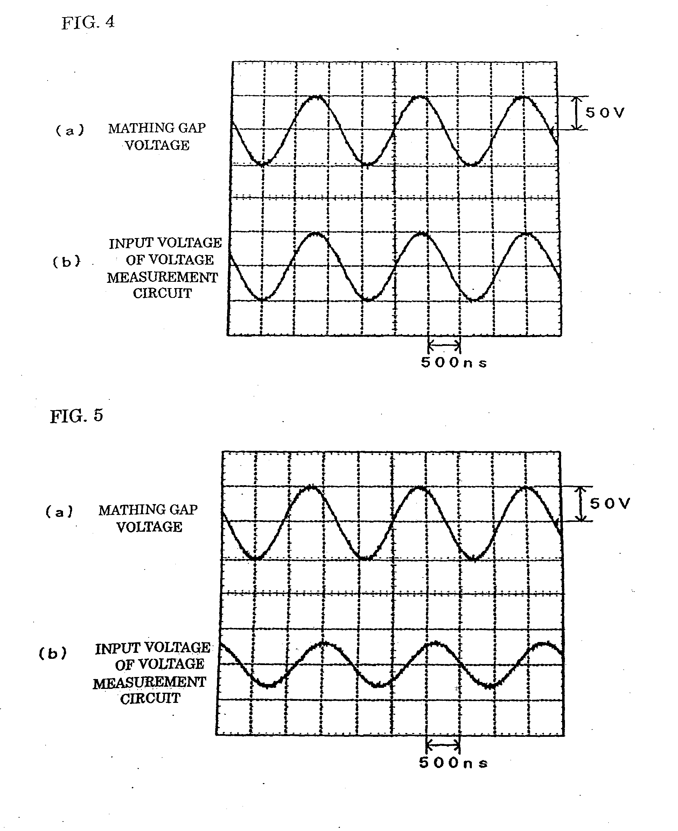

FIG. 5 is a graph showing measurement voltages obtained when a resistor having a resistance of 200 Ω is connected to a cable of a voltage measurement circuit for measuring a machining gap voltage, a high-frequency voltage is applied across the electrodes, and the machining gap voltage is measured. In FIG. 5, the horizontal axis indicates time, and the vertical axis indicates a voltage. (a)in FIG. 5 shows a machining gap voltage between a workpiece and an electrode, and (b) in FIG. 5 shows an input voltage of the voltage measurement circuit. In this example, an input voltage of the voltage measurement circuit decreases by about 35%.

## SUMMARY OF THE INVENTION

Therefore, it is an object of the present invention to provide an electric discharge machining apparatus which reduces an influence of a voltage measurement circuit for measuring voltage on voltage measurement accuracy and reduces an influence of a stray capacitance held by a cable of the voltage measurement circuit on the degree of surface roughness.

The present invention relates to an electric discharge machining apparatus which has a voltage measurement circuit for measuring a machining gap voltage between an electrode and a workpiece during machining and controls an electric discharge state and feeding of the electrode on the basis of a measurement result obtained by the voltage measurement circuit.

In an electric discharge machining apparatus according to a first aspect of the present invention, two measurement cables including a measurement cable for connecting the voltage measurement circuit to an electrode and a measurement cable for connecting the voltage measurement circuit to the workpiece consist of an insulating and flexible material and are arranged to be parallel fixed with a distance not less than four times a radius of the measurement cable, and a resistor is inserted to the electrode and the workpiece side of this measurement circuit.

With this configuration, stray capacitances of the measurement cable are decreased, and electric discharge energies caused by the stray capacitances are decreased to improve the surface roughness of a machining surface in finish machining. The drop of the machining gap voltage input to the voltage measurement circuit is reduced, and an oscillation is suppressed from being generated.

In an electric discharge machining apparatus according to a second aspect of the present invention, one terminal of a resistor capacitance divider which connects a first RC parallel circuit obtained by connecting a resistor and a capacitor in parallel to each other in series to divide a machining gap voltage between the electrode and the workpiece and outputs the divided voltages is connected to the electrode, and the other terminal is connected to the workpiece, the machining gap voltage is measured by the voltage measurement circuit through the resistor capacitance divider, and a capacitance of a second RC parallel circuit arranged on a side on which the resistor capacitance divider is connected to the voltage measurement circuit is set as a stray capacitance held by a measurement cable connected to the voltage measurement circuit.

With this configuration, a discharge energy generated by the stray capacitance is decreased, the drop of the machining gap voltage input to the voltage measurement circuit is reduced, and an oscillation is suppressed from being generated.

Furthermore, in the electric discharge machining apparatus according to the second aspect, the resistance of the first RC parallel circuit is represented by R1, the capacitance of the capacitor is represented by C1, the resistance of the second RC parallel circuit is represented by R2, and the stray capacitance held by the measurement cable is represented by C2, so that the capacitance C1 of the capacitor may be determined by a division ratio and the stray capacitance C2 held by the measurement cable to satisfy R1 · C1 = R2 · C2.

Since the electric discharge machining apparatus according to the present invention includes the above configuration, an electric discharge energy generated by the stray capacitance can be decreased, and the degree of surface roughness of the machining surface in finish machining can be improved. Furthermore, a measurement voltage input to the voltage measurement circuit can be prevented from drop down, and an oscillation of the measurement voltage can also be suppressed.

## BRIEF DESCRIPTION OF THE DRAWINGS

The above objects and features of the present invention and other objects and features thereof will be apparent from an explanation of the following embodiments with reference to the accompanying drawings, in which:

FIG. 1 is a main schematic diagram of an electric discharge machining apparatus according to a first embodiment of the present invention;

FIG. 2 is a diagram for explaining a capacitance (stray capacitance) and an inductance which are held by a parallel cable;

FIG. 3 is a main schematic diagram of an electric discharge machining apparatus according to a second embodiment of the present invention;

FIG. 4 is a graph showing a machining gap voltage obtained when a high-frequency voltage is applied across electrodes and an input voltage of a voltage measurement circuit in the electric discharge machining apparatus shown in FIG. 1;

FIG. 5 is a graph showing a machining gap voltage measured when a resistance is connected to a cable of a voltage measurement circuit and when a high-frequency voltage is applied across electrodes and an input voltage of a voltage measurement circuit in a conventional electric discharge machining apparatus; and

FIG. 6 is a graph showing a machining gap voltage measured when a high-frequency voltage is applied across electrodes and an input voltage of a voltage measurement circuit in a state in which the voltage measurement circuit is connected between the electrodes by a parallel cable.

DETAILED DESCRIPTION OF THE PREFERRED EMBODIMENTS

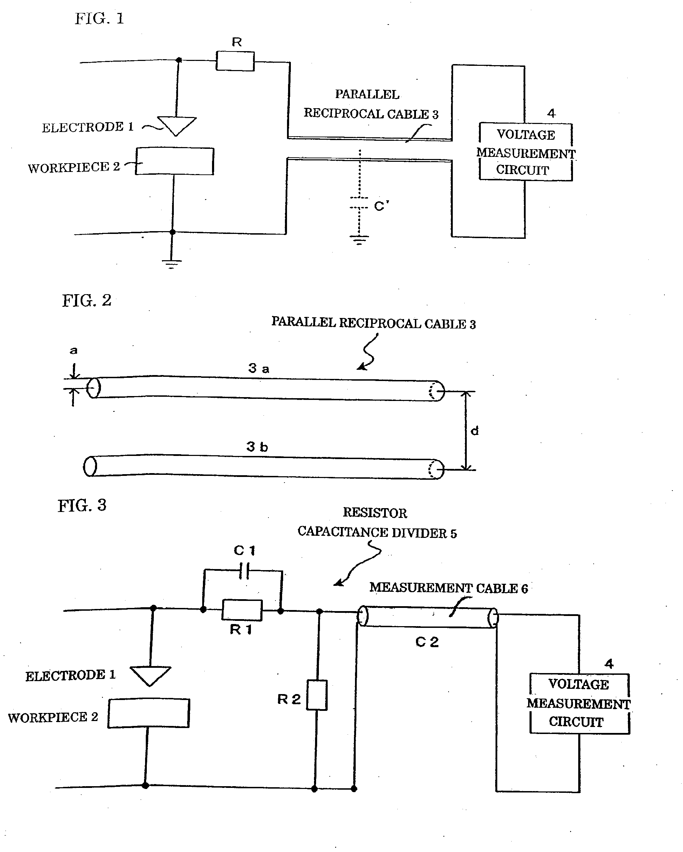

FIG. 1 is a main schematic diagram of a first embodiment of the present invention. The first embodiment has the following characteristic feature. That is, a voltage measurement circuit for measuring a machining gap voltage between an electrode and a workpiece is connected by using a parallel cable such as a television antenna feeder cable having a long distance between coming and going cables.

In FIG. 1, reference numeral 1 denotes an electrode, and reference numeral 2 denotes a workpiece to be machined. A voltage from a machining power supply (not shown) is applied across the electrode 1 and the workpiece 2 (machining gap). Reference 4 denotes a voltage measurement circuit which measures a machining gap voltage between the electrode 1 and the workpiece 2. An electric discharge state is monitored by a machining gap voltage measured by the voltage measurement circuit 4, and control of a relative feeding rate of the electrode 1 to the workpiece 2 and control of the time interval of supply voltage to the machining gap are performed.

In the voltage measurement circuit 4, conducting wires of a measurement line for measuring a machining gap voltage between the electrode 1 and the workpiece 2 are connected to both sides of the electrode 1 and the workpiece 2. Cables of the conductive wires of the measurement circuit are constituted by a parallel cable 3 constituted by two conductive wires having a long distance between 2 cables like a television antenna feeder line. More specifically, the two conductive wires are fixed by an insulating and flexible material such as rubber or resin such that the interline space is constant. Furthermore, The conductive wire connected to the electrode 1 side is connected in series with a resistor R. When the interline distance of the parallel cable 3 is increased to reduce a stray capacitance C of the parallel cable 3. When the stray capacitance C of the parallel cable 3 decreases, even though the resistor R is connected, an effect of the low-pass filter is small, and a high-frequency voltage applied in finish machining is transmitted without drop to make it possible to measure the voltage by the voltage measurement circuit 4. In this manner, the machining gap voltage between the electrode 1 and the workpiece 2 can be accurately measured.

Since the stray capacitance decreases, when electric discharge occurs between the electrode 1 and the workpiece 2, even though an energy accumulated in the stray capacitance is discharged, the discharge energy is small. As a result, an influence of the stray capacitance on electric discharge becomes small, an electric discharge energy in finish machining can be reduced, and the surface roughness of a machining surface of finish machining can be improved.

FIG. 2 is a diagram for explaining a capacitance (stray capacitance) C and an inductance L which are held by the parallel cable 3. The conductive wires of one pair of measurement lines constituting the parallel cable 3 are represented by 3a and 3b, respectively, a radius of each of the conductive wires 3a and 3b is represented by a, and a distance between wires 3a and 3b which are arranged in parallel is represented by d. In this case, a capacitance (stray capacitance) C per unit length is expressed by the following Equation (1), and the inductance L is expressed by the following Equation (2).

$$C = \pi\varepsilon/\log(d/a) \qquad\qquad (1)$$

$$L = (\mu/\pi) \times \log(d/a) \qquad\qquad (2)$$

where ε is a dielectric constant of an insulator between the conductive wires, and μ is a spatial magnetic permeability.

As is apparent from Equation (1), the capacitance (stray capacitance) C decreases when (d/a) increases. More specifically, a distance d between the conductive wires 3a and 3b is set to be large to make it possible to decrease the capacitance (stray capacitance) C. On the other hand, the inductance L increases when the distance d between the conductive wires 3a and 3b is set to be large. The capacitance (stray capacitance) C and the inductance L have a close relationship (C x L = ε x μ)

A reduction of the capacitance (stray capacitance) C is focused, and the interline distance d between the conductive wires 3a and 3b is determined and fixed to a constant value to arrange the conductive wires 3a and 3b in parallel to each other, so that the capacitance (stray capacitance) C is determined. At this time, the inductance L is uniquely determined by Equation (2). More specifically, when an upper limit of the target capacitance (stray capacitance) C is set, a lower limit of the interline distance d is determined, and a lower limit of the inductance L is automatically determined.

A capacitance per unit length in a general coaxial cable for signal transmission is about 100 pF. However, if the value (d/a) is set at about 4, the capacitance (stray capacitance) C can be suppressed to half or less. When the value (d/a) is increased, the capacitance (stray capacitance) C can be decreased, however, the effect falls rapidly, so that (d/a) < 50 is given as a practical range.

As described above, when the distance d is increased, the inductance L of the parallel cable 3 tends to increase. Resonance between the inductance L and the capacitance (stray capacitance) C easily occurs and it may oscillate measurement waveform.

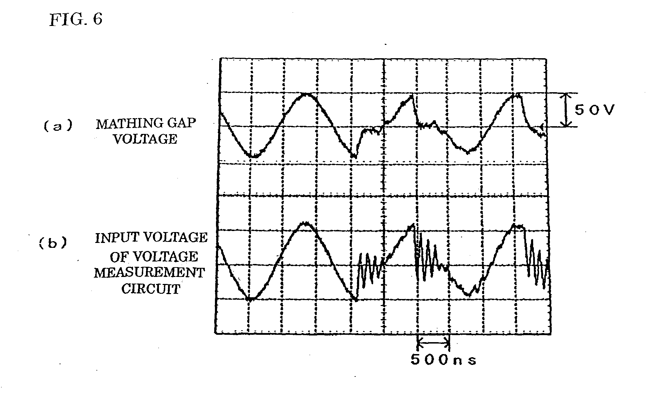

FIG. 6 is a graph showing a machining gap voltage ((a) in FIG. 6) and an input voltage ((b) in FIG. 6) of the voltage measurement circuit 4 when a high-frequency voltage is applied across the electrode 1 and the workpiece 2 in a state in which both the sides of the electrode 1 and the workpiece 2 (machining gap) are connected to the voltage measurement circuit 4 by the parallel cable 3 without the resistor R. The horizontal axis indicates time, and the vertical axis indicates a voltage. As shown in (a) in FIG. 6, the machining gap voltage does not oscillate. However, the input voltage of the voltage measurement circuit shown in (b) in FIG. 6 is oscillated.

Therefore, according to the first embodiment, as shown in FIG. 1, the voltage measurement circuit 4 which measures a machining gap voltage between the electrode 1 and the workpiece 2 is connected between the electrodes of the electrode 1 and the workpiece 2 by the parallel cable 3 through the resistor R, and the value d/a (= interline distance/conductive wire radius) is set to be 4 or more, so that oscillation of the voltage input to the voltage measurement circuit 4 is suppressed.

FIG. 4 is a graph showing a machining gap voltage between the electrode 1 and the workpiece 2 ((a) in FIG. 4) and an input voltage ((b) in FIG. 4) of the voltage measurement circuit, the voltages being measured in the first embodiment. The horizontal axis indicates time, and the vertical axis indicates a voltage. In comparison with FIG. 5, the drop of the input voltage of the voltage measurement circuit shown by (b) in FIG. 4 is small. Since the interline distance d is large, the capacitance (stray capacitance) C of the parallel cable 3 is reduced. For this reason, even though the resistor R is connected, an effect of the low-pass filter is small, and it is shown that a high-frequency signal in finish machining can be transmitted without drop. As described above, when a ratio (d/a) of the interline distance d of the parallel cable 3 to a radius a of the conductive wire is set at 4 or more and less than 50 ($4 \le (d/a) < 50$) to minimize the increase of the inductance L. At the same time, the resistor R is connected in series to suppress oscillation of the voltage input to the voltage measurement circuit 4.

The resistor R to be connected may be present on any one of the lines of the parallel cable 3 to merely suppress oscillation caused by the inductance L of the parallel cable 3. However, a capacitance C' is present between the parallel cable 3, the voltage measurement circuit 4 and the ground. In order to block a discharge current of the capacitance C' from flowing between the electrodes, for example, as shown in FIG. 1, when the workpiece 2 is grounded, the resistor R must be connected to the electrode 1 side. Furthermore, when the electrode 1 and the workpiece 2 are floated and machined without connecting the workpiece 2 to the ground, resistors R must be connected to both the electrode 1 side and the workpiece 2 side.

The parallel cable 3 such as a television antenna feeder line formed such that conductive wires are parallel connected by an insulating and flexible material such as rubber or resin with a predetermined space disadvantageously has a noise margin which is lower than that of a shielded cable or a coaxial cable which is conventionally used. However, in finish machining, generated noise is small, and a practical problem will not happen. When the parallel cable 3 is influenced by noise in rough machining, different measurement cables may be used in rough machining and finish machining, respectively. When the cable is spirally twisted and mounted, an influence of a magnetic field caused by noise can be canceled.

Since "parallel", referred to in the first embodiment, is for a reduction in inductance, this "parallel" does not means only geometric "parallel". Even though the "parallel" is macroscopical "parallel", a sufficient effect can be obtained.

FIG. 3 is a schematic diagram of a second embodiment of the present invention. The second embodiment is a method of connecting a resistor capacitance divider 5 to a machining gap side of a measurement cable, one capacitance of the resistor capacitance divider is set as a stray capacitance C2 held by a measurement cable 6 to constitute the resistor capacitance divider 5.

In the resistor capacitance divider 5, an RC parallel circuit obtained by connecting a resistor and a capacitor in parallel to each other is connected in series with both ends of a circuit the voltage of which is to be measured, and the voltage is divided to extract divided voltages. Time constants of the RC parallel circuits are made equal to each other (R1 C1 = R2 · C2) to obtain a flat frequency characteristic, and a division ratio from a direct current to a high-frequency wave can be made constant. In the second embodiment, one terminal of the RC parallel circuit constituted by a resistor R1 and a capacitance C1 is connected to the electrode 1 side, and the RC parallel circuit obtained by connecting the resistor R2 and the stray capacitance C2 held by the measurement cable 6 or the like connected to the voltage measurement circuit 4 in parallel to each other is connected to the RC parallel circuit including the resistor R1 and the capacitance C1, and the other terminal is connected to a workpiece 2. More specifically, a capacitance of one of the RC parallel circuits constituting the resistor capacitance divider 5 is constituted by the stray capacitance C2 held by the measurement cable 6 or the like connected to the voltage measurement circuit 4, and a machining gap voltage is measured by the voltage measurement circuit 4 through the resistor capacitance divider 5.

The capacitance C1 of the capacitor is determined depending on the division ratio obtained by the resistors R1 and R2 and the stray capacitance C2 to satisfy R1 · C1 = R2 · C2. In this manner, the frequency characteristic becomes flat, and a division ratio from a direct current to a high-frequency wave becomes constant. Even though the stray capacitance C2 of the measurement cable 6 is large, a measurement waveform will not become dull. Furthermore, since a resistor is connected between the voltage measurement circuit 4 and the machining gap, the stray capacitance C2 of the measurement cable 6 or stray capacitance of the voltage measurement circuit 4 does not deteriorate the surface roughness by machining gap discharge. Even though the measurement cable from the resistor capacitance divider 5 to the electrode 1 and the workpiece 2 becomes long to some extent, oscillation of a waveform of a voltage input to the voltage measurement circuit 4 can be suppressed.

**Claims**

1. An electric discharge machining apparatus which has a voltage measurement circuit for measuring a machining gap voltage between an electrode and a workpiece during machining and controls an electric discharge state and feeding of the electrode on the basis of a measurement result obtained by the voltage measurement circuit, wherein two measurement cables including a measurement cable for connecting the voltage measurement circuit to an electrode and a measurement cable for connecting the voltage measurement circuit to the workpiece are arranged to be parallel fixed by insulating and flexible material with a distance not less than four times a radius of the measurement cable, and a resistor is inserted to the electrode and the workpiece side in the measurement circuit.

2. An electric discharge machining apparatus which has a voltage measurement circuit for measuring a machining gap voltage between an electrode and a workpiece during machining and controls an electric discharge state and feeding of the electrode on the basis of a measurement result obtained by the voltage measurement circuit, wherein one terminal of a resistor capacitance divider which connects a first and a second RC parallel circuit, obtained by connecting a resistor and a capacitor in parallel to each other, in series to divide a machining gap voltage between the electrode and the workpiece and outputs the divided voltages is connected to the electrode, and the other terminal is connected to the workpiece,
the machining gap voltage is measured by the voltage measurement circuit through the resistor capacitance divider, and
a capacitance of a second RC parallel circuit connected to the voltage measurement circuit is set as a stray capacitance held by a measurement cable connected to the voltage measurement circuit.

3. The electric discharge machining apparatus according to claim 2, wherein
the resistance of the first RC parallel circuit is represented by R1, the capacitance of the capacitor is represented by C1, the resistance of the second RC parallel circuit is represented by R2, and the stray capacitance held by the measurement cable is represented by C2, so that the capacitance C1 of the capacitor is determined by a division ratio and the stray capacitance C2 held by the measurement cable to satisfy R1 · C1 = R2 · C2.

FIG. 1

R

ELECTRODE 1

WORKPIECE 2

PARALLEL
RECIPROCAL CABLE 3

4

VOLTAGE
MEASUREMENT
CIRCUIT

C'

FIG. 2

PARALLEL RECIPROCAL CABLE 3

a

3 a

3 b

d

FIG. 3

RESISTOR
CAPACITANCE DIVIDER 5

C 1

MEASUREMENT CABLE 6

R 1

C 2

ELECTRODE 1

WORKPIECE 2

R 2

4

VOLTAGE
MEASUREMENT
CIRCUIT

7

FIG. 4

(a) MATHING GAP
VOLTAGE

50V

(b) INPUT VOLTAGE
OF VOLTAGE
MEASUREMENT
CIRCUIT

500ns

FIG. 5

(a) MATHING GAP
VOLTAGE

50V

(b) INPUT VOLTAGE
OF VOLTAGE
MEASUREMENT
CIRCUIT

500ns

FIG. 6

(a)　MATHING GAP
　　　　VOLTAGE

(b)　INPUT VOLTAGE
　　　　OF VOLTAGE
　　　　MEASUREMENT
　　　　CIRCUIT

50V

500ns

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002066843 A
- JP 7328844 A

- JP 2000042835 A